# EUROPÄISCHE PATENTSCHRIFT

(11) **EP 1 077 371 B1**
(45) Veröffentlichungstag und Bekanntmachung des Hinweises auf die Patenterteilung: **10.12.2003**
(21) Anmeldenummer: 99116006.0
(22) Anmeldetag: 14.08.1999
(51) Int. Cl.: G01M 3/24, G01M 3/28

(54) **Verfahren, Anordnung und Armatur zur Überwachung eines Rohrleitungssystems**
Procedure, device and fitting for monitoring a pipeline system
Procédé, dispositif et robinetterie pour surveiller un système de conduites

(43) Veröffentlichungstag der Anmeldung: 21.02.2001
(73) Patentinhaber: Hinni AG, 4105 Biel-Benken (CH)
(72) Erfinder: Riesen, Urs, 4105 Biel-Benken (CH)
(74) Vertreter: Blum, Rudolf Emil Ernst

(56) Entgegenhaltungen:
- EP-A- 0 940 666
- DE-A- 19 757 581
- US-A- 4 066 095
- US-A- 5 040 409
- US-A- 5 272 646
- US-A- 5 708 195
- PATENT ABSTRACTS OF JAPAN vol. 012, no. 434 (M-764), 16. November 1988 (1988-11-16) & JP 63 169429 A (MATSUSHITA ELECTRIC IND CO LTD;OTHERS: 01), 13. Juli 1988 (1988-07-13)

## Beschreibung

Die vorliegende Erfindung betrifft ein Verfahren, eine Anordnung, einen Hydranten und eine Anlage zur permanenten Überwachung eines Trinkwasserversorgungsnetzes auf Leckagen.

Überwachungseinrichtungen für Rohrleitungssysteme kommen im allgemeinen dort zum Einsatz, wo eine frühzeitige Erkennung einer Leckage oder einer Störung mit dem blossen Auge nicht möglich bzw. schwierig ist. Dieses Problem ergibt sich speziell bei Rohrleitungssystemen und -systembestandteilen, welche schwer oder überhaupt nicht zugänglich sind.

Ein solches Anwendungsgebiet stellen Trinkwasserversorgungsnetze dar, bei denen eine frühzeitige visuelle Erkennung von Leckagen am erdverlegten Rohrleitungssystem praktisch nicht möglich ist. Das Vorhandensein einer Leckage zeigt sich oft erst sehr spät und oft in Form von durch diese verursachte Sachschäden. Bis diese Schäden jedoch sichtbar zu Tage treten, sind oftmals bereits vorgängig und über einen längeren Zeitraum grosse Verluste an Trinkwasser entstanden. Durch Defekte an den Armaturen selbst, durch fehlerhafte Bedienung sowie durch nicht autorisierte Entnahme von Trinkwasser kann es zusätzlich zu Schäden und wirtschaftlichen Einbussen kommen, die es ebenso zu verhindern gilt. Es ist grundsätzlich bekannt, Lecks aufgrund von charakteristischen Geräuschen zu erkennen, welche durch die an der Leckstelle austretende Flüssigkeit erzeugt werden, wofür z.B. auf DE-A-195 28 287 und den dort genannten Stand der Technik verwiesen werden kann.

DE-A 197 57 581 beschreibt eine Armatur zum Anschluss an ein erdverlegtes Leitungssystem, welche mittels Körperschallmessung Messwerte zur Leckerkennung erfasst. Die Messwerte werden periodisch gespeichert und über ein an der Armatur befindliches Schauglas optisch bzw. optoelektrisch oder über eine elektronische Kopplung ab- bzw. ausgelesen. Ein wesentlicher Nachteil dieser Vorrichtung ist es, dass das Ab- bzw. Auslesen der Messwerte dezentral und unter nicht unerheblichem Personaleinsatz stattfindet. Zudem muss sodann erst eine Auswertung der Messdaten erfolgen, um festzustellen ob eine Leckage vorhanden ist oder nicht. Dieses bedeutet, dass eine frühzeitige Erkennung nur dann gegeben ist, wenn das Ab- bzw. Auslesen und das anschliessende Auswerten in sehr kurzen Zeitabständen durchgeführt wird, und dass dieser Arbeitseinsatz auch dann geleistet werden muss, wenn kein Leck vorhanden ist. Eine Überwachung der Armaturen selbst bezüglich Defekten an denselben und deren Betriebszuständen ist hier zudem nicht möglich.

US 5 708 195 beschreibt ein Verfahren zum Erkennen von Leitungsbrüchen an Rohrleitungssystemen, bei welchem das Auftreten eines Leitungsbruchs anhand einer transienten Erscheinung zum Zeitpunkt des Leitungsbruchs (negative Druckwelle im Leitungssystem, sprunghafte Durchflussveränderung oder Bruchgeräusch) diagnostiziert wird und so auch eine etwaige durch den Leitungsbruch verursachte Leckage. Hierzu werden mindestens zwei Sensoren (z.B. Drucksensoren) mit Auswerteelektronik am Rohrleitungssystem angebracht, die nach dem Auftreten der transienten Erscheinung jeweils sowohl über das Vorhandensein eines Leitungsbruchs entscheiden als auch den ungefähren Ort desselben vorhersagen. Das vorgeschlagene Verfahren weist jedoch den Nachteil auf, dass Leckagen nur dann erkannt werden können, wenn ihnen ein fataler Rohrleitungsbruch vorausgeht. Kleine und schleichend entstehende Leckagen sowie aus diesen entstandene grosse Leckagen sind mit diesem Verfahren nicht feststellbar, da nicht leckcharakteristische Daten sondern rohrbruchcharakteristische Daten ausgewertet werden.

EP 0 940 666 stellt Stand der Technik gemäss Artikel 54 (3) EPÜ dar und beschreibt eine Vorrichtung mit einem Wasserschallaufnehmer zum permanenten Überwachen eines Trinkwasserversorgungsnetzes auf Leckagen, welche an Stelle eines bestehenden Absperrventils an das Versorgungsnetz angebaut wird, derart, dass die zuführende und die abführende Leitung des Ventils über die Vorrichtung miteinander verbunden werden.

Es stellt sich daher die Aufgabe, ein Verfahren und Vorrichtungen zur Überwachung von Trinkwasserversorgungsnetzen auf Leckagen zur Verfügung zu stellen, welche die Nachteile des Standes der Technik nicht aufweisen.

Diese Aufgabe wird von dem Verfahren, der Anordnung, dem Hydranten und der Anlage gemäss den unabhängigen Ansprüchen gelöst.

Demgemäss wird in einem Hydranten des Trinkwasserversorgungsnetzes ein Wasserschallaufnehmer derartig angeordnet, dass er unabhängig vom Betriebszustand des Hydranten permanent in Kontakt mit dem im Versorgungsnetz geführten Wasser ist, wodurch er permanent den Wasserschall im Versorgungsnetz messen kann. Der mit dem Wasserschallaufnehmer aufgenommene Wasserschall wird mit einer im Hydranten angeordneten Anordnung auf das Vorhandensein leckspezifischer Schallsignale analysiert. Werden solche Schallsignale im Wasserschall erkannt, werden von der im Hydranten angeordneten Anordnung Leckalarmmeldungen abgegeben. Hierdurch ergibt sich der Vorteil, dass eine regelmässige Nachauswertung von zuvor an der Vorrichtung ausgelesenen Messdaten durch Personen zur Leckerkennung überflüssig wird. Es werden nur relevante und bereits fertig ausgewertete Informationen übermittelt, d.h. es erfolgt nur eine Leckalarmmeldung, wenn ein Leck erkannt worden ist. Die Verwendung eines Wasserschallaufnehmers bietet zudem den Vorteil, dass das Verhältnis Nutzsignal zu Störsignal des zu messenden Leckgeräusches signifikant grösser ist als bei einer Körperschallmessung.

Bevorzugterweise ist die Anordnung zudem derartig ausgestaltet, dass sie einen Füllstand im Hydranten erkennen und bei Über- bzw. Unterschreiten des Füllstandes Füllstandszustandsmeldungen abgeben kann.

Es ist des Weiteren vorteilhaft, dass Betriebsstörungen automatisch erkannt werden und dass bei deren Erkennung Störungsmeldungen in Abhängigkeit von den erkannten Betriebsstörungen abgegeben werden. Auf diese Weise kann sofort erkannt werden, wo eine Leck- bzw. Füllstandsüberwachung nicht in Betrieb ist oder wenn Wartungsarbeiten, z.B. ein Batteriewechsel, erforderlich werden.

Auch ist es bevorzugt, dass physikalische und/oder chemische Kenngrössen des Wassers im Trinkwasserversorgungsnetz oder im Hydranten ermittelt werden und Zustandsmeldungen in Abhängigkeit von den Kenngrössen abgegeben werden. Auf diese Weise lassen sich beispielsweise die Flüssigkeitstemperatur, der Flüssigkeitsdruck und die Durchflussmenge lokal und auf einfache Weise überwachen.

Aus einer Kombination der verschiedenen Meldungen einer Anordnung können zudem Informationen über den Betriebszustand des Hydranten abgeleitet werden. So lassen sich z.B. aus Leck- und Füllstandszustandsmeldungen, und eventuell noch zusätzlich kombiniert mit Wasserdruckmeldungen, Zustände wie Wasserentnahme, gefüllter Hydrant ohne Wasserentnahme bei fehlerhafter Ausserbetriebnahme (Hauptventil geöffnet, Seitenventile geschlossen) oder ein mangelhafter oder verstopfter Entwässerungsmechanismus mit dichtem oder auch undichtem Hauptventil unterscheiden. Diese Zustände können auch durch die Anordnung selbst als fertig ausgewertete Störungsmeldungen abgegeben werden und können, wie alle anderen Meldungen auch, bei Bedarf zusätzlich Zeitinformationen enthalten, welche hier Rückschlüsse auf Beginn und Ende einer Wasserentnahme, auf den Zeitpunkt einer Fehlbedienung sowie auf den Grad der Verstopfung des Entwässerungsmechanismus zulassen.

Eine Ausführungsvariante der Erfindung betrifft eine Anordnung zum Einbau in einen Hydranten eines Trinkwasserversorgungsnetzes zwecks permanenter Überwachung des Versorgungsnetzes auf Leckagen. Die Anordnung umfasst einen Wasserschallaufnehmer zur Aufnahme des Wasserschalls im Versorgungsnetz und ist derartig ausgestaltet, dass sie Lecks im Versorgungsnetz durch Auswertung des mit dem Wasserschallaufnehmer aufgenommenen Wasserschalls anhand von leckspezifischen Schallsignalen erkennen kann. Bei Leckerkennung kann die Anordnung eine Leckalarmmeldung abgeben. Die Anordnung umfasst dem Ventilkörper für das Hauptventil des Hydrantens, und der Wasserschallaufnehmer ist auf der Seite des Ventilkörpers angeordnet, welche zur Anordnung zum Trinkwasserversorgungsnetz hin vorgesehen ist. Hierdurch ergibt sich eine einfache und kostengünstige Möglichkeit zur flächendeckenden Lecküberwachung von Trinkwasserversorgungsnetzen ohne bauliche Eingriffe an dessen Rohrleitungssystem.

Mit Vorteil ist die Anordnung zudem zur Erkennung eines Füllstandes und zur Abgabe von Füllstandszustandsmeldungen bei Über- bzw. Unterschreiten des Füllstandes ausgestaltet.

Bevorzugterweise ist der Wasserschallaufnehmer in ein Hydrantenhauptventil integriert oder an ein solches angebaut.

Die Verwendung von Wasserschallaufnehmern bietet den Vorteil, dass das Verhältnis Nutzsignal zu Störsignal des zu messenden Leckgeräusches signifikant grösser ist als bei einer Körperschallmessung. Es sind aufgrund der unterschiedlichen Vorteile auch Anordnungen denkbar, welche sowohl Wasserschall- als auch Körperschallaufnehmer aufweisen.

Zur Erkennung von Füllständen werden bevorzugterweise Füllstandssensoren verwendet, insbesondere Schwimmerschalter, es sind aber auch alle anderen Arten von Sensoren, welche eine Erkennung eines Flüssigkeitsstandes zulassen, so z.B. auch kapazitive Sensoren und Widerstandssensoren, denkbar.

Die Abgabe von Meldungen kann optisch und/oder akustisch, zum Beispiel in Form von Lichtsignalen oder Tönen, erfolgen.

Auch ist es bevorzugt, wenn die Abgabe von Meldungen durch Fernübermittlung erfolgt und insbesondere, wenn sie durch drahtlose Übermittlung erfolgt. Für die Fernübermittlung kommen optische, akustische und elektrische Leitungen wie zum Beispiel Lichtleiter, Rohrleitungssysteme (z.B. das überwachte Rohrleitungssystem) oder elektrische Kabel in Frage, für die drahtlose Übermittlung alle bekannten Methoden wie Funk, Ultraschall, Infrarot usw. Vorteilhaft bei der Fernübermittlung ist, dass hierdurch die regelmässige vor Ort Kontrolle entfällt, welche bei Überwachung des Versorgungsnetzes mit mehreren Anordnungen sehr aufwendig sein kann. Bei Verwendung der drahtlosen Übermittlung ergibt sich als weiterer Vorteil, dass in oben erwähntem Fall auf eine aufwendige Infrastruktur von Kommunikationsleitungen verzichtet werden kann und dass somit ausserdem auch bewegliche Meldungsempfänger (z.B. in einem Fahrzeug) möglich sind.

In einer weiteren bevorzugten Ausführungsvariante ist die Anordnung programmierbar und/oder parametrierbar. Hieraus ergibt sich der Vorteil, dass die Auswertealgorithmen und die Steuerungsfunktionen individuell auf den jeweiligen Anwendungsfall angepasst werden können, wodurch die Leckerkennungswahrscheinlichkeit gesteigert werden kann.

Bevorzugterweise kann die Parametrierung bzw. Programmierung ferngesteuert von einem von der Anordnung bzw. Armatur entfernt gelegenen Ort aus erfolgen und insbesondere drahtlos von einem solchen Ort aus. Eine vor Ort Präsenz von Personal ist somit nur für die Erstinstallation und nachher ausschliesslich für Servicearbeiten nach einer vorgängig erfolgten Störungsmeldung erforderlich. Auch eröffnet sich die Möglichkeit, eine automatische Optimierung der Algorithmen und Funktionen einer Anordnung in Abhängigkeit von deren Meldungshistorie vorzunehmen.

Bevorzugterweise werden die Meldungen von einer Zentrale entgegengenommen, welche derart ausgestaltet sein kann, dass sie die Meldungen mehrerer Anordnungen im wesentlichen zeitgleich entgegennehmen kann. Diese Zentrale kann die Meldungen wahrnehmbar machen und/oder diese an einen Empfänger, insbesondere an einen Pager oder ein drahtloses Telephon weiterleiten. Ebenso kommen an Stelle von Mobiltelephonen und Pagern auch andere Empfänger und Sender/Empfänger in Frage, welche zudem auch über Drähte oder Leitungen mit der Zentrale verbunden sein können. Hierdurch ergibt sich der Vorteil, dass eine zentrale Überwachung der Meldungen aller Anordnungen eines Versorgungsnetzes möglich ist, was eine erhöhte Kontroll- und Überwachungssicherheit gewährleistet. Auch besteht die Möglichkeit, die zuständige Stelle, z.B. das verantwortliche Servicepersonal, automatisch zu informieren, sobald eine bestimmte Meldung von einer Anordnung aus dem jeweiligen Zuständigkeitsbereich eintrifft bzw. Instruktionen vom Empfänger entgegenzunehmen.

Wenn die Programmierung und/oder Parametrierung der Anordnungen über die Zentrale erfolgt und insbesondere wenn diese drahtlos erfolgt, ergibt sich zusätzlich die Möglichkeit, simultan an mehreren Anordnungen Anpassungen oder Korrekturen der Auswertealgorithmen und/oder Steuerungsfunktionen vorzunehmen.

Weitere bevorzugte Ausführungen der Erfindung ergeben sich aus den abhängigen Ansprüchen sowie aus der nun folgenden Beschreibung anhand der Figuren. Dabei zeigen:
Fig. 1 eine Schnittdarstellung eines mit einer Anordnung zur Überwachung eines Trinkwasserversorgungsnetzes bestückten Hydranten;
Fig. 2 eine schematische Darstellung einer Anlage zur Überwachung eines Trinkwasserversorgungsnetzes.

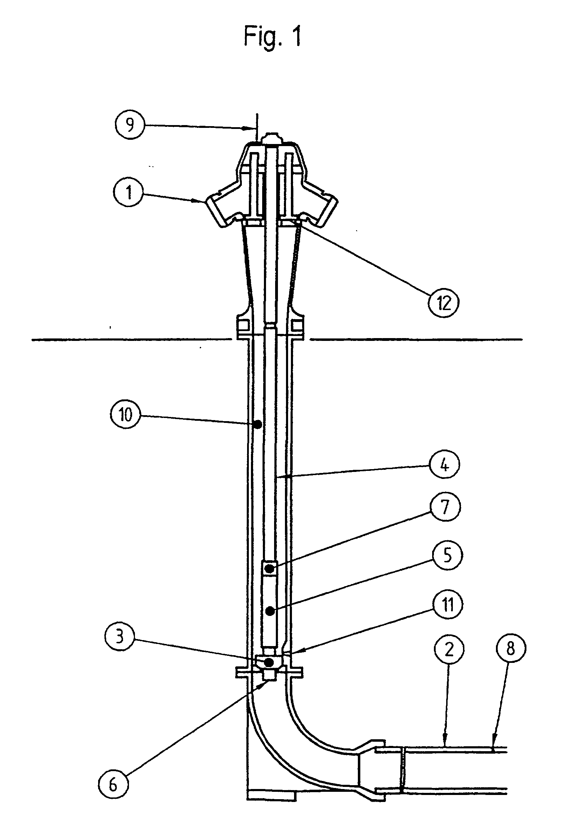

Der Grundaufbau einer bevorzugten Ausführung der Erfindung in Form einer Anordnung welche in einen an ein Trinkwasserversorgungsnetz angebauten Hydranten eingebaut ist, zeigt Fig. 1. Wie zu ersehen ist, weist der Hydrant 1 an seinem unteren Ende, welches an das Trinkwasserversorgungsnetz 2 angeschlossen ist, ein Hauptventil 3 auf, dessen Ventilkörper auf der dem Hydranteninnern zugewandten Seite an die Hydranten-Hauptventilstange 4 angrenzt, in welcher sich die Anordnung 5 zur Überwachung des Rohrleitungssystems 2 befindet. In diesem Ausführungsbeispiel ist die Anordnung 5 batteriebetrieben, jedoch sind ebenso Ausführungen denkbar, welche einen festen Stromanschluss aufweisen oder eigene Energieerzeugungsmittel wie beispielsweise Solarzellen kombiniert mit Akkumulatoren aufweisen. Auf der dem Trinkwasserversorgungsnetz 2 zugewandten Seite des Hauptventils 3 trägt der Ventilkörper ein Hydrophon 6, welches zur Anordnung 5 gehört und den Wasserschall innerhalb des Rohrleitungssystems 2 aufnimmt. Bei Hydranten oder Armaturen, welche zwischen dem Hauptventil und dem Rohrleitungsnetz 2 noch zusätzliche Absperrorgane besitzen, befindet sich das Hydrophon 6 auf der dem Rohrleitungssystem 2 zugewandten Seite der Absperrorgane, wodurch das Hydrophon 6 unabhängig von der Stellung der Absperrorgane mit dem Wasser des Rohrleitungssystems 2 in Verbindung steht und den Wasserschall aufnehmen kann.

Im Innenbereich des Hydranten 1 ist ein Schwimmerschalter 7 angeordnet, welcher ebenfalls zur Anordnung 5 gehört und zur Erkennung des Über- bzw. Unterschreitens eines bestimmten Füllstandes im Hydranteninnern dient. Denkbar sind hier auch alle anderen Arten von Sensoren, welche eine Erkennung eines Wasserstandes zulassen, so z.B. auch kapazitive Sensoren und Widerstandssensoren. Tritt nun ein Leck 8 im Rohrleitungssystem 2 auf, so erzeugt dieses infolge eines Ausströmens von Wasser unter Überdruck Schallwellen, welche sich durch die Rohrleitung als Körperschall und durch das Wasser im Rohrleitungssystem 2 als Wasserschall ausbreiten. Bei dieser Ausführungsvariante wird der Wasserschall innerhalb des Rohrleitungssystems 2 vom Hydrophon 6 aufgenommen und innerhalb der Anordnung 5 ausgewertet. Die Auswertung erfolgt dabei durch Analyse der Schallsignale, wodurch leckcharakteristische Signale von den übrigen Schallereignissen unterschieden werden können. Die Auswertung erfolgt in der Anordnung vorzugsweise durch einen mit Speichermitteln versehenen Rechner, der die digitalisierten Schallsignale analysiert und über das Vorhandensein eines Lecks 8 entscheidet. Ergibt die Auswertung, dass eine Leckage 8 vorliegt, so gibt die Anordnung 5 eine Leckalarmmeldung ab. Hierzu umfasst. die dargestellte Anordnung 5 eine Antenne 9, welche oben.auf dem Hydranten 1 angebracht ist und mit welcher sie die Meldung an einen Empfänger (nicht dargestellt) sendet. Neben der Abgabe von Meldungen über Funk sind verschiedene andere Ausführungen denkbar, so z.B. mittels elektrischen oder optischen Leitungen oder z.B. mittels Ultraschall durch die Luft oder durch die Rohrleitungswandungen bzw. durch das sich im Rohrleitungsnetz befindliche Wasser. Auch ist es denkbar, eine einfache optische Anzeige wie z.B. eine Lampe oder Leuchtdiode aussen am Hydranten anzubringen oder ein hörbares akustisches Alarmsignal vom Hydranten auszusenden.

Wird das Hydrantenhauptventil 3 leicht geöffnet oder ist dieses leicht undicht, so tritt Wasser in den Hydranteninnenbereich 10 ein, welches jedoch über den Entwässerungsmechanismus 11 unterhalb des Schwimmerschalters 7 abfliesst. Das Durchströmen des Öffnungsspaltes bzw. der Undichtigkeit erzeugt indes Schallwellen, welche vom Hydrophon 6 aufgenommen und von der Anordnung 5 ausgewertet, als Leck 8 erkannt und als solches gemeldet werden.

Wird das Hydrantenhauptventil 3 ganz geöffnet, so wird der Entwässerungsmechanismus 11 verschlossen und der Hydrant 1 füllt sich vollständig mit Wasser. Sobald ein bestimmter Füllstand erreicht ist, meldet der Schwimmerschalter 7 das Überschreiten desselben. Die Anordnung 5 gibt nun eine Füllstandsüberschreitungsmeldung ab, welche sie bei dieser Ausführung wie die Leckalarmmeldung über die Antenne 9 per Funk an einen Empfänger sendet.

Wird das Hydrantenhauptventil 3 anschliessend geschlossen, so entweicht das sich im Hydranteninnenbereich 10 befindliche Wasser über den Entwässerungsmechanismus 11 und bei Unterschreiten eines bestimmten Füllstandes meldet der Schwimmerschalter 7 dieses und die Anordnung 5 gibt auf die vorher beschriebene Art und Weise eine Füllstandsunterschreitungsmeldung ab. Ebenso ist es denkbar, dass eine Meldung erfolgt solange ein Füllstand überschritten ist. Bei der hier dargestellten Ausführung mit Funkübermittlung und Batteriespeisung ist es aus Gründen der beschränkten Lebensdauer der Batterien erstrebenswert, dass nur dann Meldungen versendet werden, wenn Zustandsänderungen auftreten und dass der jeweilige letzte Zustand beim Empfänger gespeichert wird, bis eine anders lautende Meldung von der Anordnung 5 eintrifft. Es sind aber ebenso Ausführungen denkbar, bei denen alle Zustandsmeldungen praktisch "On-Line" abgegeben werden, unabhängig davon, ob eine Änderung eingetreten ist oder nicht. Auch ist es denkbar, die Meldungen in festen Intervallen oder auf Anfrage hin abzugeben.

Ist der Entwässerungsmechanismus 11 teilweise oder ganz verstopft, so kann das eventuell bei einem undichten oder nicht vollständig geschlossenen Hydrantenhauptventil 3 in den Hydranteninnenbereich 10 eindringende Wasser nicht sofort oder nur langsam abfliessen und führt zu einem Auffüllen des Hydranteninnenbereichs 10 mit Wasser, was ebenfalls zur Abgabe einer Füllstandsüberschreitungsmeldung durch die Anordnung 5 führt.

Ist der Entwässerungsmechanismus 11 ganz verstopft, so kann nach einer Wasserentnahme das sich im Hydranteninneraum 10 befindliche Wasser nicht abfliessen, wodurch die Füllstandsunterschreitungsmeldung nach abgeschlossener Wasserentnahme ausbleibt.

Werden nach einer Wasserentnahme an einem Hydranten 1 mit Seitenventilen 12 fälschlicherweise die Seitenventile 12 geschlossen und das Hauptventil 3 in geöffnetem Zustand belassen, so ist der Hydranteninneraum 10 ebenfalls mit Wasser gefüllt.

In allen beschriebenen Fällen, in denen Wasser im Hydranteninnenraum 10 verbleibt, besteht in den Wintermonaten die Gefahr einer Zerstörung des Hydranten durch Frostsprengung.

Neben den unabhängigen Leck- und Füllstandszustandsmeldungen lassen sich aus der Kombination derselben sowie aus deren zeitlichem Zusammenspiel zusätzliche Rückschlüsse auf verschiedene Betriebszustände eines Hydranten ziehen, wie z.B. "Hydrant in Benutzung oder mit starker innerer Leckage", "gefüllter Hydrant ohne Wasserentnahme " sowie "vorschriftsgemässer Hydrant im Ruhezustand". Ergänzt man die Anordnung 5 um zusätzliche Sensoren zur Erfassung physikalischer und/oder chemischer Kenngrössen des Wassers, beispielsweise um einen Sensor zur Aufnahme des Wasserdruckes vor dem Hydrantenhauptventil 3 und um einen Sensor zur Aufnahme des Druckes im Hydranteninnenraum 10, so lassen sich noch weitaus differenziertere Betriebszustände bzw. Defekte ableiten. Mit Hilfe geeigneten Auswertealgorithmen ist es auch denkbar, dass diese als zusätzliche Zustandsund/oder Störungsmeldungen fertig ausgewertet von der Anordnung 5 abgegeben werden und dass ausserdem physikalische und/oder chemische Kenngrössen überwacht und gemeldet werden können.

Auch verfügt die Anordnung 5 über die Möglichkeit, interne Störungen wie z.B. zu niedrige Batteriespannung oder fehlende Messsignale, zu erkennen und entsprechende Meldungen abzugeben.

Um möglichst individuell auf den jeweiligen Anwendungsfall anpassbar zu sein, sind die Auswertealgorithmen und Steuerfunktionen der Anordnung 5 programmierbar und/oder parametrierbar. Dieses kann erstmals im Herstellungswerk erfolgen oder vor Ort bei der Erstinstallation. Auch ist es vorgesehen, dass nach erfolgter Installation eine Anpassung und Korrektur der Auswertealgorithmen und Steuerfunktionen jederzeit möglich ist. Hierzu eignen sich die gleichen Schnittstellen, über welche auch die Meldungen abgegeben werden, vorausgesetzt dass diese bidirektional ausgestaltet sind.

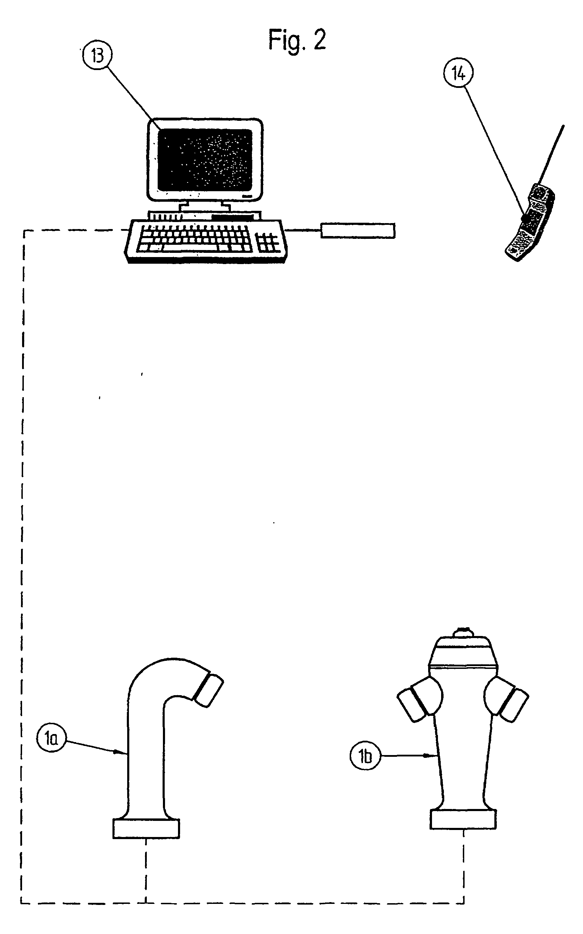

In Fig. 2 ist eine Anlage zur Überwachung eines Rohrleitungssystems für Wasser dargestellt, die aus zwei Hydranten 1a, 1b, welche mit erfindungsgemässen Anordnungen versehen sind, aus einer Zentrale 13 und aus einem Mobiltelephon 14 besteht. Es kommen an Stelle von Mobiltelephonen handelsübliche Pager oder auch andere Empfänger und Sender/Empfänger in Frage, welche zudem auch über Drähte oder Leitungen mit der Zentrale 13 verbunden sein können. Die von den Anordnungen der Hydranten 1a, 1b gesendeten Meldungen werden von der Zentrale 13 entgegengenommen und von dieser wahrnehmbar gemacht, indem beispielsweise bestimmte Meldungen auf einer Übersichtstafel über das Rohrleitungssystem durch das Aufleuchten von Lampen angezeigt werden, eine Alarmsirene ertönt oder ein Alarmblinklicht aufleuchtet. Auch werden die Meldungen von der Zentrale an das Mobiltelephon 14 des verantwortlichen Servicepersonals weitergeleitet. Auch wenn hier nur eine Zentrale 13 und ein Mobiltelephon 14 dargestellt ist, so ist es ebenso denkbar, dass mehrere Zentralen 13 verknüpft sind und dass eine Zentrale 13 aus einer Vielzahl von Servicetelephonen 14 in Abhängigkeit von der Art und Herkunft der Meldung diese nur an ein bestimmtes, für den jeweiligen Fall zuständiges Mobiltelephon 14 weiterleitet. Besonders sinnvoll erscheint dieses bei sehr grossen Wasserversorgungsnetzen, bei denen verschiedene Personen oder Stellen für Hydranten 1a, 1b in bestimmten Regionen zuständig sind. Zudem kann es sinnvoll sein, wenn nur sehr wichtige Meldungen von der Zentrale 13 weitergegeben werden. Die Zentrale 13 kann unbemannt sein und diese Auswahlentscheide aufgrund geeigneter Algorithmen treffen. In diesem Beispiel ist die Verbindung zwischen Zentrale 13 und Mobiltelephon 14 unidirektional, es ist aber ebenso denkbar, das eine bidirektionale Verbindung besteht welche z.B. die Quittierung einer Alarmmeldung oder z.B. eine Fernparametrierung und/oder Femprogrammierung einer Anordnung in einem Hydranten 1a, 1b oder einer Armatur über die Rückantwort an die Zentrale 13 zulässt. Auch ist es vorgesehen, dass eine Parametrierung und/oder Programmierung der Anordnungen von der Zentrale 13 aus erfolgen kann. Denkbar ist hier ausserdem die Möglichkeit, dass die Zentrale 13 in Kenntnis der Meldungs- historie der einzelnen Anordnungen mit geeigneten Algorithmen eine automatische, individuelle Optimierung der Auswertealgorithmen und Steuerungsfunktionen einzelner Anordnungen vornimmt oder auch, dass die Zentrale 13 simultan Änderungen an mehreren Anordnungen vornimmt.

Die vorgängige Beschreibung beschreibt die Erfindung am Beispiel eines Verfahrens, einer Anordnung, eines Hydranten und einer Anlage zur Überwachung von Rohrleitungssystemen für Wasser. Die Anwendung bei Rohrleitungssystemen für Wasser ist bevorzugt, jedoch ist die Erfindung nicht auf diese beschränkt sondern kann auch bei Rohrleitungssystemen für andere flüssige Medien eingesetzt werden.

## Patentansprüche

1. Verfahren zur permanenten Überwachung eines mit Hydranten (1) versehenen Trinkwasserversorgungsnetzes (2) auf Leckagen, umfassend die Verfahrensschritte:
a) Anordnen eines Wasserschallaufnehmers (6) in einem Hydranten (1) des Trinkwasserversorgungsnetzes (2) derart, dass der Wasserschallaufnehmer (6) unabhängig vom Betriebszustand des Hydranten (1) permanent in Kontakt mit dem im Trinkwasserversorgungsnetz (2) geführten Wasser ist, zur Ermöglichung einer permanenten Übertragung des Wasserschalls auf den Wasserschallaufnehmer (6);
b) Aufnehmen des Wasserschalls im Trinkwasserversorgungsnetz (2) mit dem Wasserschallaufnehmer (6);
c) Analyse des mit dem Wasserschallaufnehmer (6) aufgenommenen Wasserschalls mit einer im Hydranten (1) angeordneten Anordnung (5) auf das Vorhandensein leckspezifischer Schallsignale; und
d) Abgabe von Leckalarmmeldungen durch die im Hydranten (1) angeordnete Anordnung (5) bei Erkennung leckspezifischer Schallsignale im gemessenen Wasserschall.

2. Verfahren nach Anspruch 1, bei dem der Hydrant (1) ein Hauptventil (3) mit einem Ventilkörper aufweist und der Wasserschallaufnehmer (6) auf der dem Trinkwasserversorgungsnetz (2) zugewandten Seite des Ventilkörpers angeordnet wird.

3. Verfahren nach Anspruch 2, bei dem der Hydrant (1) eine Hydranten-Hauptventilstange (4) aufweist, in der ein mit Speichermitteln versehener Rechner der Anordnung (5) angeordnet ist.

4. Verfahren nach einem der vorangehenden Ansprüche, bei dem die Anordnung (5) ausgestaltet ist zur Erkennung eines Füllstandes im Hydranten und bei Über- bzw. Unterschreiten des Füllstandes Füllstandszustandsmeldungen abgibt.

5. Verfahren nach einem der vorangehenden Ansprüche, bei dem die Anordnung (5) interne Betriebsstörungen erkennt und bei deren Erkennung Störungsmeldungen abgibt.

6. Verfahren nach einem der vorangehenden Ansprüche, bei dem die Anordnung (5) physikalische und/oder chemische Kenngrössen des Wassers im Trinkwasserversorgungsnetz (2) oder im Hydrant (1) ermittelt und Zustandsmeldungen in Abhängigkeit von den Kenngrössen abgibt.

7. Verfahren nach einem der vorangehenden Ansprüche, bei dem die Anordnung (5) die Meldungen auf optischem und/oder akustischem Wege abgibt.

8. Verfahren nach einem der vorangehenden Ansprüche, bei dem die Anordnung (5) die Meldungen durch Fernübermittlung abgibt, und insbesondere, dass sie die Meldungen durch drahtlose Übermittlung abgibt.

9. Verfahren nach einem der vorangehenden Ansprüche, bei dem die Anordnung (5) programmiert und/oder parametriert wird, insbesondere ferngesteuert programmiert und/oder parametriert wird, und insbesondere, bei dem diese drahtlos programmiert und/oder parametriert wird.

10. Verfahren nach einem der vorangehenden Ansprüche, bei dem die von der Anordnung (5) abgesandten Meldungen von mindestens einer Zentrale (13) entgegengenommen werden.

11. Verfahren nach Anspruch 10, bei dem die Zentrale (13) die entgegengenommenen Meldungen wahrnehmbar macht und/oder an einen Empfänger, insbesondere an einen Pager und/oder ein drahtloses Telephon (14) weiterleitet, und insbesondere, bei dem die Zentrale (13) vom Empfänger Instruktionen entgegennimmt.

12. Verfahren nach einem der Ansprüche 10 bis 11, bei dem eine Parametrierung und/oder Programmierung der Anordnung (5) über die Zentrale (13) erfolgt und insbesondere, bei dem diese Programmierung und/oder Parametrierung über die Zentrale (13) drahtlos erfolgt.

13. Anordnung (5) zum Einbau in einen Hydranten (1) eines Trinkwasserversorgungsnetzes (2) zwecks permanenter Überwachung des Trinkwasserversorgungsnetzes (2) auf Leckagen, wobei die Anordnung (5) einen Wasserschallaufnehmer (6) aufweist zur Aufnahme des Wasserschalls im Trinkwasserversorgungsnetz (2) und derartig ausgestaltet ist, dass sie Lecks (8) im Trinkwasserversorgungsnetz (2) durch Auswertung des mit dem Wasserschallaufnehmer (6) aufgenommenen Wasserschalls anhand von leckspezifischen Schallsignalen erkennen kann und bei Leckerkennung eine Leckalarmmeldung abgeben kann, und wobei die Anordnung (5) einen Ventilkörper für ein Hauptventil (3) des Hydranten (1) umfasst und der Wasserschallaufnehmer (6) auf der Seite des Ventilkörpers angeordnet ist, welche zur Anordnung zum Trinkwasserversorgungsnetz (2) hin vorgesehen ist.

14. Anordnung (5) nach Anspruch 13, die zur Erkennung eines Füllstandes und zur Abgabe von Füllstandszustandsmeldungen bei Über- bzw. Unterschreiten des Füllstandes ausgestaltet ist.

15. Anordnung (5) nach einem der Ansprüche 13 bis 14, die zur Erkennung von internen Betriebsstörungen und bei deren Erkennung zur Abgabe von Störungsmeldungen ausgestaltet ist.

16. Anordnung (5) nach einem der Ansprüche 13 bis 15, die zur Ermittlung physikalischer und/oder chemischer Kenngrössen des im Trinkwasserversorgungsnetz (2) und/oder innerhalb des Hydranten (1) befindlichen Wassers und zur Abgabe von Zustandsmeldungen in Abhängigkeit von den Kenngrössen ausgebildet ist.

17. Anordnung nach einem der Ansprüche 13 bis 16 umfassend einen mit Speichermitteln versehenen Rechner und eine Hydranten-Hauptventilstange (4), wobei der mit Speichermitteln versehenen Rechner in der Hydranten-Hauptventilstange (4) angeordnet ist.

18. Anordnung nach Anspruch 13 und nach Anspruch 17, wobei die Anordnung (5) derartig ausgestaltet ist, dass die Seite des Ventilkörpers, welche zur Anordnung zum Hydranteninnern (10) vorgesehen ist, an die Hydranten-Hauptventilstange (4) angrenzt.

19. Anordnung (5) nach einem der Ansprüche 13 bis 18, wobei die Anordnung (5) einen Füllstandssensor, insbesondere einen SchwimmerSchalter (7), umfasst.

20. Anordnung (5) nach einem der Ansprüche 13 bis 19, wobei die Anordnung (5) ausgestaltet ist zur Abgabe von Meldungen auf optischem und/oder akustischem Wege.

21. Anordnung (5) nach einem der Ansprüche 13 bis 20, wobei die Anordnung (5) ausgestaltet ist zur Fernübermittlung von Meldungen und insbesondere zur drahtlosen Übermittlung von Meldungen.

22. Anordnung (5) nach einem der Ansprüche 13 bis 21, die programmierbar und/oder parametrierbar ist, insbesondere ferngesteuert programmierbar und/oder parametrierbar ist, und die insbesondere drahtlos programmierbar und/oder parametrierbar ist.

23. Hydrant (1) mit mindestens einer Anordnung (5) nach einem der Ansprüche 13 bis 22.

24. Hydrant (1) nach Anspruch 23, der derartig ausgestaltet ist, dass der Wasserschallaufnehmer nicht durch Absperrorgane des Hydranten (1) vom Wasser im Trinkwasserversorgungsnetz (2) isolierbar ist.

25. Hydrant (1) nach einem der Ansprüche 23 bis 24, wobei der Wasserschallaufnehmer in das Hydrantenhauptventil (3) integriert oder an diesem angebaut ist.

26. Anlage zur Überwachung eines mit Hydranten (1) versehenen Trinkwasserversorgungsnetzes (2) auf Leckagen, mit mindestens einer Anordnung (5) bzw. mit mindestens einem Hydranten (1) nach einem der Ansprüche 13 bis 25, insbesondere mit mindestens zwei Anordnungen (5) bzw. Hydranten (1a, 1b) nach einem der Ansprüche 13 bis 25, des Weiteren umfassend mindestens eine Zentrale (13), welche ausgestaltet ist zur Entgegennahme der von den Anordnungen (5) abgesandten Meldungen, und insbesondere zur im wesentlichen zeitgleichen Entgegennahme der von den Anordnungen (5) abgesandten Meldungen.

27. Anlage nach Anspruch 26, bei der die Zentrale (13) zur Wahrnehmbarmachung der entgegengenommenen Meldungen und/oder Weiterleitung der entgegengenommenen Meldungen an einen Empfänger, insbesondere an einen Pager und/oder ein drahtloses Telephon (14), und insbesondere zur Entgegennahme von Instruktionen vom Empfänger ausgestaltet ist.

28. Anlage nach einem der Ansprüche 26 bis 27, bei der die Zentrale (13) zur Parametrierung und/oder Programmierung der Anordnungen (5), insbesondere zur drahtlosen Parametrierung und/oder Programmierung der Anordnungen (5) ausgestaltet ist.

## Claims

1. Method for a permanent monitoring of a drinking water supply mains (2) having hydrants (1) regarding leakages, comprising the steps:
a) Placing an underwater sound pick-up (6) in a hydrant (1) of the drinking water supply mains (2) in such a manner that the underwater sound pick-up (6) is, independent of the operational status of the hydrant (1), permanently in contact with the water in the drinking water supply mains (2), for enabling of a permanent transmittal of the underwater sound to the underwater sound pick-up (6);
b) Picking-up of the underwater sound in the drinking water supply mains (2) by means of the underwater sound pick-up (6);
c) Analysing the underwater sound picked-up by the underwater sound pick-up (6) by a system (5) located within the hydrant (1) for the presence of leak specific sound signals; and
d) Release of leackage alarm messages by the system (5) located within the hydrant (1) upon detection of leak specific sound signals in the picked-up underwater sound.

2. Method of claim 1, wherein the hydrant (1) has a main valve (3) with a valve body and the underwater sound pick-up (6) is arranged at that side of the valve body which is facing towards the drinking water supply mains (2).

3. Method of claim 2, wherein the hydrant (1) has a hydrant main valve rod (4) inside which a processor of the system (5), which is having memory means, is located.

4. Method of one of the preceding claims, wherein the system (5) is adapted for the detection of a liquid level in the hydrant and releases a liquid level status message upon an exceeding or falling short of said liquid level.

5. Method of one of the preceding claims, wherein the system (5) detects internal operational malfunctions and releases, upon detection of the same, malfunction messages.

6. Method of one of the preceding claims, wherein the system (5) determines physical and/or chemical parameters of the water in the drinking water supply mains (2) or in the hydrant (1) and releases, in dependence of these parameters, status messages.

7. Method of one of the preceding claims, wherein the system (5) optically and/or accoustically releases the messages.

8. Method of one of the preceding claims, wherein the system (5) releases the messages by telecommunication, and in particular, that it releases the messages by wireless transmission.

9. Method of one of the preceding claims, wherein the system (5) is programmed and/or parameterized, in particular is remote-controlled programmed and/or parameterized, and in particular, wherein it is programmed and/or parameterized in wireless manner.

10. Method of one of the preceding claims, wherein the messages sent by the system (5) are received by at least one central unit (13).

11. Method of claim 10, wherein the central unit (13) makes the received messages perceptible and/or forwards them to a receiver, in particular to a pager and/or a wireless phone (14), and in particular, wherein the central unit (13) receives instructions from the receiver.

12. Method of one of the claims 10 to 11, wherein a parametrisation and/or a programming of the system (5) is made via the central unit (13), and in particular, wherein this parametrisation and/or programming is made in wireless manner via the central unit (13).

13. System (5) for the installation within a hydrant (1) of a drinking water supply mains (2) for the purpose of a permanent monitoring of the drinking water supply mains (2) regarding leakages, wherein the system (5) has an underwater sound pick-up (6) for picking-up of the underwater sound in the drinking water supply mains (2) and is adapted in such way that it can detect leakages (8) within the drinking water supply mains (2) by analyzing the underwater sound picked-up by the underwater sound pick-up (6) on the basis of leak specific sound signals and can, upon leak detection, release leakage alarm messages, and wherein the system (5) comprises a valve body for a main valve (3) of the hydrant (1) and the underwater sound pick-up (6) is arranged at that side of the valve body, which is designated for being arranged facing towards the drinking water supply mains (2).

14. System (5) of claim 13, which is adapted for the detection of a liquid level and for the release of liquid level status messages upon an exceeding or falling short of said liquid level.

15. System (5) of one of the claims 13 to 14, which is adapted for the detection of internal operational malfunctions and for the release of malfunction messages upon detection of the same.

16. System (5) of one of the claims 13 to 15, which is adapted for the determination of physical and/or chemical parameters of the water in the drinking water supply mains (2) and/or in the hydrant (1) and for the release of status messages in dependence of said parameters.

17. System (5) of one of the claims 13 to 16, comprising a processor having memory means and a hydrant main valve rod (4), wherein the processor having memory means is arranged within the hydrant main valve rod (4).

18. System (5) of claim 13 and of claim 17, wherein the system (5) is adapted in such a manner that the side of the valve body, which is designated for being arranged facing towards the inside of the hydrant (10), abuts to the hydrant main valve rod (4).

19. System (5) of one of the claims 13 to 18, wherein the system (5) comprises a liquid level sensor, in particular a float switch (7).

20. System (5) of one of the claims 13 to 19, wherein the system (5) is adapted for a release of messages in optical and/or acoustical manner.

21. System (5) of one of the claims 13 to 20, wherein the system (5) is adapted for a teletransmission of messages, and in particular for a wireless transmission of messages.

22. System (5) of one of the claims 13 to 21, which is programmable and/or parameterisable, in particular remote-controlled programmable and/or parameterisable, and in particular, which is programmable and/or parameterisable in wireless manner.

23. Hydrant (1) comprising at least one system (5) according to one of the claims 13 to 22.

24. Hydrant (1) of claim 23, which is adapted in such manner that the underwater sound pick-up cannot be isolated from the water in the drinking water supply mains (2) by isolating devices of the hydrant (1).

25. Hydrant (1) of one of the claims 23 to 24, wherein the underwater sound pick-up is integrated into the main valve of the hydrant (3) or is attached to it.

26. Installation for the monitoring of a drinking water supply mains (2) having hydrants (1) regarding leakages, having at least one system (5) or at least one hydrant (1), respectively, according to one of the claims 13 to 25, in particular having at least two systems (5) or hydrants (1), respectively, according to one of the claims 13 to 25, further comprising at least one central unit (13), which is adapted for the receipt of the messages sent by the systems (5), and in particular for a substantially simultan receipt of the messages sent by the systems (5).

27. Installation of claim 26, wherein the central unit (13) is adapted for making the received messages perceptible and/or for forwarding of the received messages to a receiver, in particular to a pager and/or a wireless phone (14), and in particular for the receipt of instructions from the receiver.

28. Installation of one of the claims 26 to 27, wherein the central unit (13) is adapted for a parameterisation and/or programming of the systems (5), in particular for a wireless parameterisation and/or programming of the systems (5).

## Revendications

1. Procédé pour la surveillance permanente des fuites d'un réseau d'alimentation en eau potable (2) doté de prises d'eau (1), comportant les étapes suivantes :
a) Disposition d'un enregistreur de bruits d'eau (6) dans une prise d'eau (1) du réseau d'alimentation en eau potable (2) de telle façon que l'enregistreur de bruits d'eau (6), indépendamment de l'état de fonctionnement de la prise d'eau (1), est en contact permanent avec l'eau passant dans le réseau d'alimentation en eau potable (2), pour permettre une transmission permanente des bruits d'eau vers l'enregistreur de bruits d'eau (6) ;
b) enregistrement des bruits d'eau dans le réseau d'alimentation en eau potable (2) avec l'enregistreur de bruits d'eau (6) ;
c) analyse des bruits d'eau enregistrés par l'enregistreur de bruits d'eau (6) avec un dispositif (5) placé dans la prise d'eau (1) pour détecter la présence de signaux sonores spécifiques aux fuites ; et
d) délivrance de messages d'avertissement de fuites par le dispositif (5) placé dans la prise d'eau (1) en cas de détection de signaux sonores spécifiques aux fuites dans les bruits d'eau mesurés.

2. Procédé selon revendication 1, suivant lequel la prise d'eau (1) présente une vanne principale (3) avec un corps de vanne et l'enregistreur de bruits d'eau (6) est placé sur le côté du corps de vanne tourné vers le réseau d'alimentation en eau potable.

3. Procédé selon revendication 2, suivant lequel la prise d'eau (4) présente une barre de vanne principale pour prise d'eau (4) dans laquelle est placé un calculateur du dispositif (5) doté de moyens de mémorisation.

4. Procédé selon l'une quelconque des revendications précédentes, suivant lequel le dispositif (5) est configuré pour détecter un niveau de remplissage dans la prise d'eau et délivre des messages d'état de remplissage en cas de dépassement ou de sous-passement du niveau de remplissage.

5. Procédé selon l'une quelconque des revendications précédentes, suivant lequel le dispositif (5) reconnaît des incidents de service internes et délivre des messages d'anomalie en cas de détection de tels incidents.

6. Procédé selon l'une quelconque des revendications précédentes, suivant lequel le dispositif (5) détermine des grandeurs caractéristiques physiques et/ou chimiques de l'eau dans le réseau d'alimentation en eau potable (2) ou dans la prise d'eau (1) et délivre des messages d'état en fonction des grandeurs caractéristiques.

7. Procédé selon l'une quelconque des revendications précédentes, suivant lequel le dispositif (5) délivre des messages par voie optique et/ou acoustique.

8. Procédé selon l'une quelconque des revendications précédentes, suivant lequel le dispositif (5) délivre des messages par télétransmission et, en particulier, suivant lequel elle délivre les messages par transmission sans fil.

9. Procédé selon l'une quelconque des revendications précédentes, suivant lequel le dispositif (5) est programmé et/ou paramétré, en particulier programmé et/ou paramétré par voie télécommandée et, en particulier, de manière qu'il soit programmé et/ou paramétré sans fil.

10. Procédé selon l'une quelconque des revendications précédentes, suivant lequel les messages envoyés par la disposition (5) sont réceptionnés par au moins une centrale (13).

11. Procédé selon revendication 10, suivant lequel la centrale (13) rend les messages réceptionnés perceptibles et/ou les transmet à un récepteur, en particulier à un récepteur de radio-messagerie et/ou à un téléphone sans fil (14), et en particulier, de manière que la centrale (13) reçoive des instructions du récepteur.

12. Procédé selon l'une quelconque des revendications 10 à 11, suivant lequel un paramétrage et/ou une programmation du dispositif (5) est réalisé(e) par l'intermédiaire de la centrale (13) et, en particulier, de manière que cette programmation et/ou ce paramétrage soit réalisé(e) sans fil par l'intermédiaire de la centrale (13).

13. Dispositif (5) destiné à être installé dans une prise d'eau (1) d'un réseau d'alimentation en eau potable (2) afin de surveiller en permanence les fuites du réseau d'alimentation en eau potable (2), le dispositif (5) présentant un enregistreur de bruits d'eau (2) pour enregistrer les bruits d'eau dans le réseau d'alimentation en eau potable (2) et étant configuré de manière à pouvoir détecter des fuites (8) dans le réseau d'alimentation en eau potable (2) en analysant les bruits d'eau enregistrés avec l'enregistreur de bruits d'eau (6) à l'aide de signaux sonores spécifiques aux fuites et pouvant délivrer un message d'avertissement de fuites en cas de détection de fuites et la disposition (5) englobant un corps de vanne pour une vanne principale (3) de la prise d'eau (1) et l'enregistreur de bruits d'eau (6) étant placé sur le côté du corps de vanne qui est prévu pour la disposition vers le réseau d'alimentation en eau potable (2).

14. Dispositif (5) selon revendication 13, qui est configuré pour reconnaître un niveau de remplissage et pour délivrer des messages de niveau de remplissage en cas de dépassement ou de sous-passement du niveau de remplissage.

15. Dispositif (5) selon l'une quelconque des revendications 13 à 14, qui est configuré pour détecter des incidents de service internes et, en cas de détection de tels incidents, pour délivrer des messages d'anomalie.

16. Dispositif (5) selon l'une quelconque des revendications 13 à 15, qui est configuré pour déterminer des grandeurs caractéristiques physiques et/ou chimiques de l'eau se trouvant dans le réseau d'alimentation en eau potable (2) et/ou à l'intérieur de la prise d'eau et pour délivrer des messages d'état en fonction des grandeurs caractéristiques.

17. Dispositif selon l'une quelconque des revendications 13 à 16, comportant un calculateur doté de moyens de mémorisation et une barre de vanne principale de prise d'eau (4), le calculateur doté de moyens de mémorisation étant placé dans la barre de vanne principale de prise d'eau.

18. Dispositif selon revendication 13 et selon revendication 17, le dispositif (5) étant configuré de manière que le côté du corps de vanne, lequel est prévu pour la disposition vers l'intérieur de la prise d'eau (10), soit contigu à la barre de vanne principale de prise d'eau (4).

19. Dispositif (5) selon l'une quelconque des revendications 13 à 18, le dispositif (5) comportant un capteur de remplissage, en particulier un flotteur (7).

20. Dispositif (5) selon l'une quelconque des revendications 13 à 19, le dispositif (5) étant configuré pour délivrer des messages par voie optique et/ou acoustique.

21. Dispositif (5) selon l'une quelconque des revendications 13 à 20, le dispositif (5) étant configuré pour télétransmettre des messages et en particulier pour transmettre sans fil des messages.

22. Dispositif (5) selon l'une quelconque des revendications 13 à 21, qui est programmable et/ou paramétrable, en particulier programmable et/ou paramétrable par voie télécommandée et, en particulier, qui est programmable et/ou paramétrable sans fil.

23. Prise d'eau (1) comportant au moins un dispositif selon l'une quelconque des revendications 13 à 22.

24. Prise d'eau (1) selon revendication 23 qui est configurée de manière à ce que l'enregistreur de bruits d'eau ne puisse être isolé de l'eau dans le réseau d'alimentation en eau potable (2) par des organes d'isolement de la prise d'eau (1).

25. Prise d'eau (1) selon l'une quelconque des revendications 23 à 24, l'enregistreur de bruits d'eau étant intégré à la vanne principale de la prise d'eau (3) ou placé sur celle-ci.

26. Installation de surveillance des fuites d'un réseau d'alimentation en eau potable doté de prises d'eau (1), comportant au moins un dispositif (5) respectivement au moins une prise d'eau (1) selon l'une quelconque des revendications 13 à 25, en particulier comportant au moins deux dispositifs (5) respectivement prises d'eau (1a, 1b) selon l'une quelconque des revendications 13 à 25, comportant par ailleurs au moins une centrale (13) qui est configurée pour réceptionner les messages envoyés par les dispositifs (5) et, en particulier, pour réceptionner essentiellement en temps réel les messages envoyés par les dispositifs (5).

27. Installation selon revendication 26 dans laquelle la centrale (13) est configurée pour rendre perceptibles les messages réceptionnés et/ou pour transmettre les messages réceptionnés à un récepteur, en particulier à un récepteur de radio-messagerie et/ou à un téléphone sans fil (14) et, en particulier, pour réceptionner des instructions du récepteur.

28. Installation selon l'une quelconque des revendications 26 à 27, dans laquelle la centrale (13) est configurée pour paramétrer et/ou programmer les dispositifs (5), en particulier pour paramétrer et/ou programmer sans fil les dispositifs (5).
